# EUROPEAN PATENT SPECIFICATION

(11) **EP 3 985 421 B1**
(45) Date of publication and mention of the grant of the patent: **01.10.2025**
(21) Application number: 19933303.0
(22) Date of filing: 09.12.2019
(51) Int. Cl.: G02B 6/42

(54) **OPTICAL MODULE UNLOCKING DEVICE**
ENTRIEGELUNGSVORRICHTUNG FÜR OPTISCHE MODULE
DISPOSITIF DE DÉVERROUILLAGE DE MODULE OPTIQUE

(30) Priority: 17.06.2019 CN 201910523603
(43) Date of publication of application: 20.04.2022
(73) Proprietor: Accelink Technologies Co., Ltd., Wuhan City, Hubei Province 430074 (CN)
(72) Inventor: HUANG, Hanjie, Wuhan City, Hubei Province 430074 (CN); ZHOU, Yun, Wuhan City, Hubei Province 430074 (CN); QUAN, Benqing, Wuhan City, Hubei Province 430074 (CN); SHENG, Yubang, Wuhan City, Hubei Province 430074 (CN)
(74) Representative: Frenkel, Matthias Alexander
(86) International application number: PCT/CN2019/124128
(87) International publication number: WO 2020/253154

(56) References cited:
- CN-A- 104 950 402
- CN-A- 106 405 751
- CN-A- 106 405 751
- CN-A- 108 802 920
- CN-A- 110 261 972
- US-A1- 2010 316 336
- US-A1- 2015 188 635
- US-A1- 2016 161 681
- US-A1- 2017 031 109
- US-A1- 2018 269 630
- US-B1- 10 079 452
- US-B2- 8 113 723

## Description

### CROSS-REFERENCE

The present disclosure claims the benefit of, and priority to Chinese Patent Application No. 201910523603.2 filed on June 17, 2019.

### TECHNICAL FIELD OF THE DISCLOSURE

The disclosure relates to the field of optical module structures, in particular to an optical module unlocking device.

### BACKGROUND

With the increasingly fierce competition in respect of products price in the field of communication equipment, the price of the optical module structure is also required to be lower and lower. As the core component of fiber access network, the SFP optical module can be connected to or disconnected from the device without cutting off the power supply. In order to make a better use of the hot-plugging performance of SFP optical modules, it is also necessary to continuously improve and optimize the unlocking structure for realizing hot-plugging of SFP optical modules.

At present, an unlocking structure of an optical module adopts an unlocking assembly composed of a torsion spring, a screw, a card cover and an unlocking block to realize unlocking of the optical module. The unlocking assembly is installed on the base of the optical module, and specifically, the unlocking block is coupled with the chute of the base, the torsion spring is installed between the unlocking block and the card cover, and then the card cover is fixed to the base of the optical module with the screw. The unlocking block is configured to jack up the matching shielding cage shrapnel to unlock the optical module, and the torsion spring is configured to reset the unlocking block under the action of elastic force after the optical module is unlocked, and the card cover is configured to realize the fixing of the unlocking block and the torsion spring. This optical module unlocking assembly comprises four parts, resulting in a higher total price of the optical module unlocking assembly, complicated installation and high inventory cost; at the same time, this optical module unlocking assembly is unlocked by means of the cooperation of four parts, thus a fault occurred in one part will lead to the failure of the unlocking structure of the optical module.

A patent application publication US 2015/188635 A1 provides pluggable optical transceiver module for being plugged in a housing. The housing has a cover and an elastic piece, and the cover has an accommodating space. One end of the elastic piece is connected to the cover while the other end has a first fastening portion. The first fastening portion is located on one side of the accommodating space. The pluggable optical transceiver module comprises a base and a sliding member. The base comprises a base body and a second fastening portion. The base body has a guide surface, and the second fastening portion is next to the guide surface. The base is for being plugged in the accommodating space, and the second fastening portion is fastened with the first fastening portion. The sliding member comprises a body section and a push section connected to each other. The body section is slidably disposed on the base.

A patent application publication US 2017/031109A1 provides an optical communications module with a moving pin latching/delatching system that includes an elongated pull tab that is easily accessible and a latch base having a proximal end that is mechanically coupled to a distal end of the pull tab. The latch base has a latch locking pin disposed on a distal end thereof for engaging a latch opening of a cage when the module is mated with the cage and the latch base is in the latched position. When a pull force of sufficient magnitude is exerted on the pull tab in a direction away from the cage parallel to a longitudinal axis of the pull tab, the latch base is moved from a latched position to a delatched position, which causes the pin to move from an extended position to a retracted position in which the pin is disengaged from the opening of the cage.

A patent application publication US 10079452B1 provides a removal unit including a latch and a tab separably connectable to the latch. The latch includes latch arms each including a connection hole and an opening extending from the connection hole and being smaller than the connection hole. The tab includes a body, tab arms extending from the body, and protrusions provided on the tab arms to protrude toward each other. The protrusions each include a connecting part and an engaging part extending from the connecting part and being larger than the connection hole. The connecting part is provided on the tab arm, and configured to be placed into the connection hole. The connecting part has a width in a first direction smaller than the width of the opening and a length in a second direction perpendicular to the first direction smaller than the diameter of the connection hole and greater than the width of the opening.

A patent application publication US 2016/161681 A1 provides a pluggable optical connector with a lock and release mechanism having a slider. The slider includes a handle, two spaced apart longitudinal arms extending from the handle and along two opposite sidewalls of a housing of the connector, two wedges formed at two free ends of the two arms respectively for forcing two deflectable locking tabs formed on a cage outwards when the connector is plugged into the cage and locked therein, and a bridge extending between the two arms. A single transverse leaf spring is positioned between the bridge and a transverse vertical wall extending inwardly from the housing of the connector. The leaf spring exerts spring force in a longitudinal direction, and locking of the connector is released with a reverse movement of the connector countering the spring force.

In view of this, overcoming the defects of the prior art is an urgent task to be fulfilled in the technical field.

### SUMMARY

The technical problem to be solved by embodiments of the present disclosure is that in the existing optical module unlocking structure, the unlocking assembly is composed of a plurality of parts, resulting in a higher cost and complicated installation, and any faults in any part can cause the failure of the optical module unlocking structure.

The embodiments of the present disclosure adopt following technical scheme.

In the first aspect, an embodiment of the present disclosure provides an optical module unlocking device, comprising a pull ring and a base;
the base including at least one chute, and the base may including at least one baffle;
an unlocking component of the pull ring being arranged on the base, at least one unlocking block of the unlocking component being in contact with the at least one chute, and may at least one bending portion of the unlocking component being limited by the at least one baffle, wherein the pull ring is made of an elastic material;
the unlocking component being slidable relatively on the base, and driving the at least one unlocking block to slide into the at least one chute and then hide in a bottom of the at least one chute, so as to enable the optical module to be in a locked state, or to abut against at least one oblique side of the at least chute and then bulge, so as to enable the optical module to be unlocked; and
the at least one bending portion being configured to drive the pull ring to rebound under a limiting action of the at least one baffle after the at least one unlocking block abuts against the at least one oblique side and then bulges; and
the unlocking component is configured to unlock the optical module unlocking device when a height of an upper surface of the at least one unlocking block after the at least one unlocking block abuts against the at least one oblique side of the at least chute and then bulges is higher than a first height of an upper surface of a projection of the base.

In an embodiment, the base is provided with at least one oblique block, and at least one oblique surface of the at least one oblique block is respectively coincident with a plane where the at least one oblique side of the at least one chute is located, so that a second height of the upper surface of the at least one unlocking block is increased after the at least one unlocking block abuts against the at least one oblique side and then bulges, enabling the second height to be higher than the first height of the upper surface of the projection, and then to realize the unlocking of the optical module unlocking device.

In an embodiment, a guide post is respectively provided on both sides of the base, and a guide slot is respectively provided on rib plates of both sides of the unlocking component, the guide slot and the guide post being in position coupling, and the guide slot being slidable relatively along the guide post.

In an embodiment, all of the bending portions comprise a rebound protrusion, which is configured to drive the pull ring to rebound under a limiting action of the at least one baffle.

In an embodiment, after the unlocking component is installed on the base, the rebound protrusion of the at least one bending portion and the at least one baffle plate are interference fit.

In an embodiment, a number of the at least one bending portion and a number of the at least one baffle plate are both 2.

In an embodiment, the unlocking component further comprises a long arm, which is connected to the at least one unlocking block; and
the base is provided with a sliding slot, which is in position coupling with the long arm, and along which the long arm is slidable relatively.

In an embodiment, the pull ring further comprises a handle, which is configured to apply a pulling force to pull the pull ring.

In an embodiment, an elastic material of the pull ring is PEI plastic or LCP plastic, and the pull ring is integrally formed.

In the second aspect, an embodiment of the present disclosure provides an optical module unlocking device, comprising a pull ring and a base;
the base including a chute which includes an oblique side;
the pull ring including an unlocking component arranged on the base, and the unlocking component includes an unlocking block which is in contact with the chute, wherein the pull ring is made of an elastic material; and
the unlocking component being slidable relatively on the base, and driving the unlocking block to slide into the chute and hide in a bottom of the chute, so as to enable the optical module to be in a locked state, or to abut against the oblique side of the chute and then bulge, so as to enable the optical module to be unlocked, the unlocking component being configured to unlock the optical module when a height of an upper surface of the unlocking block after the unlocking block abuts against the oblique side of the chute and then bulges is higher than a first height of an upper surface of a projection of the base.

In general, compared with the prior art, the above technical solutions conceived by the embodiments of the present disclosure have the following beneficial effects. In an optical module unlocking device provided by the embodiments of the present disclosure, the unlocking component of the pull ring is arranged on the base, the pull ring is made of an elastic material, and the unlocking component can slide relatively along the base to drive at least one unlocking block to slide into at least one chute of the base and then hide in the bottom of at least one chute or abut against the at least one oblique side of the at least one chute and then bulge. When the at least one unlocking block abuts against the at least one oblique side of the at least one chute and bulges, the shielding cage shrapnel matched with the optical module is jacked up to unlock the optical module, and then at least one bending portion is limited by at least one baffle of the base, and drives the pull ring to rebound under the action of elastic force. The pull ring of the optical module unlocking device provided by the embodiments of the present disclosure is an integrated part, which cause the cost to be lower due to fewer parts, the failure probability of the integrated pull ring to be lower, the cooperation and installation between the pull ring and the base to be simpler, and the optical module to be capable of unlocking quickly.

### BRIEF DESCRIPTION OF THE DRAWINGS

In order to more clearly illustrate the technical solutions of the embodiments of the present disclosure, the accompanying drawings that need to be used in the embodiments of the present disclosure will be briefly introduced below. Obviously, the drawings to be described below are only some embodiments of the present disclosure, and for those of ordinary skill in the art, other drawings can also be obtained from these drawings without creative efforts.
Fig. 1 is a schematic diagram of a pull ring of an optical module unlocking device provided by an embodiment of the present disclosure;
Fig. 2 is another schematic diagram of the pull ring of the optical module unlocking device provided by the embodiment of the present disclosure;
Fig. 3 is another schematic diagram of the pull ring of the optical module unlocking device provided by the embodiment of the present disclosure;
Fig. 4 is another schematic diagram of the pull ring of the optical module unlocking device provided by the embodiment of the present disclosure;
Fig. 5 is a schematic diagram of a base of the optical module unlocking device provided by the embodiment of the present disclosure;
Fig. 6 is another schematic diagram of the base of the optical module unlocking device provided by the embodiment of the present disclosure;
Fig. 7 is an exploded view of the optical module unlocking device provided by the embodiment of the present disclosure;
Fig. 8 is an assembly schematic diagram of the optical module unlocking device provided by the embodiment of the present disclosure;
FIG. 9 is a schematic diagram of the optical module, in a non-unlocked state, provided by the embodiment of the present disclosure;
FIG. 10 is a schematic diagram of the optical module, in an unlocked state, provided in the embodiment of the present disclosure.

### DETAILED DESCRIPTION

In order to make the purpose, technical solutions and advantages of the present disclosure clearer, the present disclosure will be described in further detail below in conjunction with the accompanying drawings and embodiments. It should be understood that the specific embodiments described herein are only configured to explain the present disclosure, but not to limit the present disclosure.

In the description of the embodiments of the present disclosure, the terms "inner", "outer", "longitudinal", "horizontal", "upper", "lower", "top", and "bottom", etc. indicate orientations or positions based on the orientation or position relationship shown in the drawings, which is only for the convenience of describing the embodiments of the present disclosure rather than requiring that the embodiments of the present disclosure must be constructed and operated in a specific orientation, and therefore they should not be construed as a limitation of the present disclosure.

In addition, the technical features involved in various embodiments of the present disclosure described below can be combined with each other as long as they do not conflict with each other.

### Embodiment 1

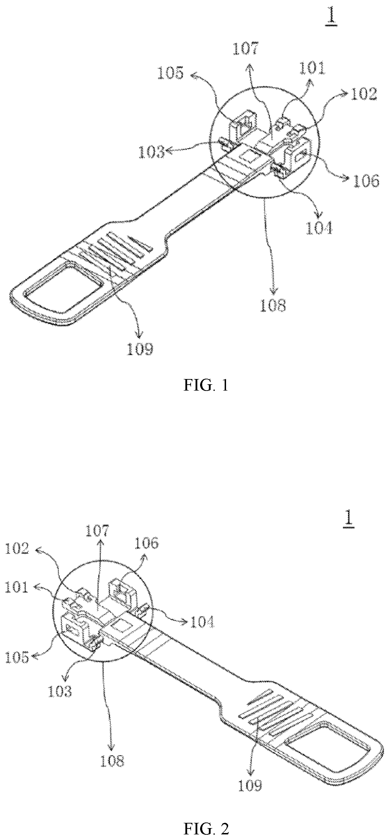

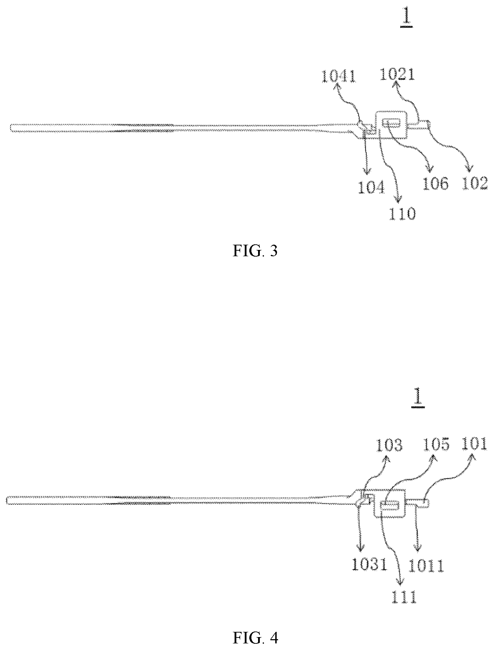

Embodiment 1 of the present disclosure provides an optical module unlocking device, as shown in FIGS. 1 to 8, comprising a pull ring 1 and a base 2.

The base 2 including at least one chute (201,202) and at least one baffle (203,204).

An unlocking component 108 of the pull ring 1 is arranged on the base 1, and at least one unlocking block (101, 102) of the unlocking component 108 is in contact with the at least one chute (201, 202). At least one bending portion (103, 104) of the unlocking component 108 is limited by the at least one baffle (203, 204). The pull ring 1 is made of an elastic material.

The unlocking component 108 can slide relatively on the base 2, and drive the at least one unlocking block (101, 102) to slide into the at least one chute (201, 202) and then hide in the bottom of the at least one chute (201, 202), or to abut against at least one oblique side (2011, 2021) of the at least one chute (201, 202) and then bulge.

The at least one bending portion (103, 104) is used for driving the pull ring 1 to rebound under the limiting action of the at least one baffle (203, 204), after the at least one unlocking block (101, 102) abuts against the at least one oblique side (2011, 2021) and then bulges.

In the optical module unlocking device provided by the embodiment of the present disclosure, the unlocking component of the pull ring is arranged on the base; the pull ring is made of an elastic material; and the unlocking component can slide relatively along the base, and drive the at least one unlocking block to slide into the at least one chute of the base and then hide in the bottom of the at least one chute or to abut against the at least one oblique side of the at least one chute and then bulges. When the at least one unlocking block abuts against the at least one oblique side of the at least one chute of the base and then bulges, the shielding cage shrapnel matched with the optical module is jacked up to unlock the optical module, and then the at least one bending portion of the pull ring is limited by the at least one baffle of the base and drives the pull ring to rebound under the action of elastic force. The pull ring of the optical module unlocking device provided by the embodiment of the present disclosure is an integrated part, and as such, the cost is lower due to fewer parts, the failure probability of the integrated pull ring is lower, the cooperation and installation between the pull ring and the base is simpler, and the optical modules could be unlocked quickly.

The structure, installation method and working principle of each component of the optical module unlocking device provided in Embodiment 1 of the present disclosure will be described below in conjunction with FIG. 1 to FIG. 8.

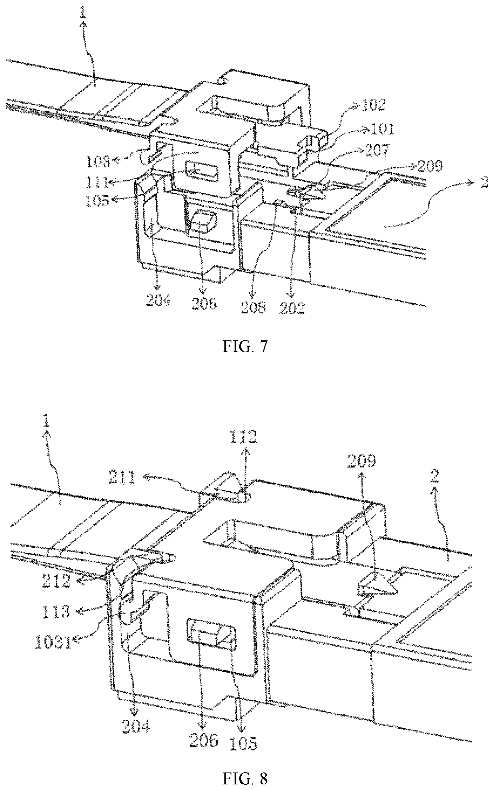

In conjunction with Embodiment 1 of the present disclosure, referring to Fig. 7 and Fig. 8, the optical module unlocking device comprises a pull ring 1 and a base 2. In practical application, the optical module unlocking device is assembled into the optical module. A circuit board is provided in the optical module, and the optical module is locked in the shielding cage to realize optical interconnection. When the optical module needs to be removed from the shielding cage, the shielding cage shrapnel can be lifted by pulling the pull ring 1 of the optical module unlocking device, and the optical module can be removed from the shielding cage to unlock the optical module.

The structure of the pull ring 1 will be described in conjunction with the embodiment 1 of the present disclosure and with reference to FIG. 1 to FIG. 4. The pull ring 1 includes a handle 109 and an unlocking component 108. The pull ring 1 can be pulled by applying a pulling force to the handle 109, and then the unlocking component 108 can jack up the shielding cage shrapnel in contact with it to realize unlocking. The unlocking component 108 includes at least one unlocking block (101, 102), at least one bending portion (103, 104), and a guide slot 106 provided on a rib plate 110 and a guide slot 105 provided on a rib plate 111 on both sides. At least one bending portion (103, 104) is arranged on a side, in contact with the handle 109, of the unlocking component 108; at least one unlocking block (101, 102) is arranged on a side, away from the handle 109, of the unlocking component 108; and at the same time, at least one bending portion (103, 104) and at least one unlocking block (101, 102) are respectively arranged on opposite ends of the unlocking component 108. At least one bending portion (103, 104) is provided with a rebound protrusion. The bending portion 103 is provided with a rebound protrusion 1031 which protrudes toward the handle 109; the bending portion 104 is provided with a rebound protrusion 1041 which protrudes toward the handle 109. A long arm 107 is also provided on the unlocking component 108, and the long arm 107 is connected with at least one unlocking block (101, 102). The pull ring 1 is integrally formed with an elastic material. In an embodiment, the elastic material of the pull ring 1 may be PEI plastic or LCP plastic, wherein the PEI plastic is Polyetherimide plastic, and LCP plastic is a liquid crystal polymer.

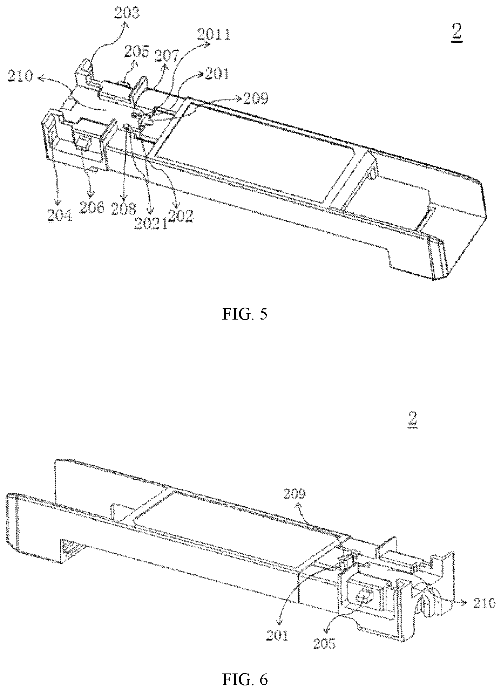

The structure of the base 2 will be described in conjunction with the embodiment 1 of the present disclosure and with reference to FIG. 5 and FIG. 6. The base 2 is a rectangular shell, and the base 2 includes at least one chute (201, 202), at least one baffle (203, 204), and guide posts 205 and 206 respectively arranged on both sides of the base 2. The number of at least one chute (201, 202) is the same with that of at least one unlocking block (101, 102). Each chute is composed of a slot and an oblique side. For example, the chute 201 includes an oblique side 2011, and the chute 202 includes an oblique side 2021. The unlocking component 108 can slide relatively on the base 2, and drive the at least one unlocking block (101, 102) to slide into the at least one chute (201, 202) and then hide in a bottom of the at least one chute (201, 202), and at this time, the optical module is in a locked state; or to abut against the at least one oblique side (2011, 2021) of the at least one chute (201, 202) and then bulge, to jack up the shrapnel of the shielding cage, and at this time, the optical module is unlocked.

The base 2 is also provided with at least one oblique block (207, 208), and at least one oblique surface of the at least one oblique block (207, 208) is respectively coincide with a plane where the at least one oblique side (2011, 2021) of the at least one chute (201, 202) located, so as to lift a second height of an upper surface of the at least one unlocking block (101, 102) after the at least one unlocking block (101, 102) abuts against the at least one oblique side (2011, 2021) and bulges, so that the second height is higher than the first height of the upper surface of a projection 209 to realize the unlocking of the optical module unlocking device. The at least one baffle (203, 204) and the at least one bending portion (103, 104) have the same number, and the at least one baffle (203, 204) is configured to limit the at least one bending portion (103, 104), so that the at least one bending portion (103, 104) drives the pull ring 1 to rebound under the action of elastic force. The base 2 is also provided with a sliding shot 210. After the unlocking component 108 is installed on the base 2, the sliding slot 210 and the long arm 107 are positionally coupled, that is, the long arm 107 can slide relatively along the sliding slot 210.

In conjunction with Embodiment 1 of the present disclosure, referring to FIG. 7 and FIG. 8, the position or connection relationship of the pull ring 1 and the base 2 that constitute the optical module unlocking device will be described. In Embodiment 1, for an easy description, the number of unlocking blocks and the number of oblique slots are both 2, but in Embodiment 1, the number of unlocking blocks and the number of oblique slots is not limited to 2, for example, the number of unlocking blocks and the number of oblique slots can also be 1. The numbers of unlocking blocks and chutes are not limited here, and the improvements on the number of unlocking blocks and chutes made by those of ordinary skill in the art still belong to the protection scope of the present disclosure.

After the unlocking component 108 of the pull ring 1 is installed on the base 2, the unlocking block 101 is in contact with the bottom of the chute 202, and the first oblique surface 1011 of the unlocking block 101 is in contact with the oblique side 2021 of the chute 202; the unlocking block 102 is in contact with the bottom of the chute 201, and the second oblique surface 1021 of the unlocking block 102 is in contact with the oblique side 2011 of the chute 201. The long arm 107 and the sliding slot 210 are positionally coupled, that is, the long arm 107 is located in the sliding slot 210 and can slide relatively along the sliding slot 210. The guide slot 105 and the guide post 206 are in position coupling, that is, the guide post 206 is located in the guide slot 105, and the guide slot 105 and the guide post 206 can slide relative to each other; the guide slot 106 and the guide post 205 are in position coupling, that is, the guide post 205 is located in the guide slot 106, and the guide slot 106 and the guide post 205 can slide relative to each other. The bending portion 103 is limited by the baffle plate 204, and there is an interference fit between the rebound protrusion 1031 of the bending portion 103 and the baffle plate 204; the structure of the bending portion 104 is the same as that of the bending portion 103, and the bending portion 104 is limited by the baffle 203, and further, there is an interference fit between the rebound protrusion 1041 of the bending portion 104 and the baffle 203. A first through slot 112 and a second through slot 113 are also provided on the pull ring 1, and a first post 211 and a second post 212 respectively coupled with the first through slot 112 and the second through slot 113 are also arranged on the base 2, wherein the first post 211 and the first through slot 112 can slide relatively to each other, and the second post 212 and the second through slot 113 can slide relatively each other.

In conjunction with Embodiment 1 of the present disclosure, referring to FIG. 7, the manner in which the pull ring 1 and the base 2 are assembled into an optical module unlocking device will be described. the unlocking component 108 of the pull ring 1 is faced to the base 2, the rib plate 111 corresponds to the guide post 206, the rib plate 110 corresponds to the guide post 205, and the unlocking component 108 is pressed, so that the guide post 206 stretches the rib plate 111, and the guide post 205 stretches the rib plate 110, in this way, the guide post 206 enters the guide slot 105 and the guide post 205 and then the guide slot 106, and then the rib plate 110 and the rib plate 111 rebound under the action of their own elastic force, and fit with the side walls of the base 2 on both sides; at the same time, it can be realized that the unlocking block 101 enters the bottom of the chute 202, the unlocking block 102 enters the bottom of the chute 201, the bending portion 103 is limited by the baffle 204, and the bending portion 104 is limited by the baffle 203.

It should be noted that, for the purpose of snapping the unlocking component 108 of the pull ring 1 with the base 2 in a more convenient and laborsaving manner, the guide post 205 and the guide post 206 are respectively provided with oblique surfaces, so that the rib plate 110 and the rib plate 110 are stretched smoothly, which allows the guide post 205 to enter the guide slot 106 and the guide post 206 to enter the guide slot 105. At the same time, the baffle 203 and the baffle 204 are both also provided with oblique surfaces, so that the rebound protrusion 1031 of the bending portion 103 and the rebound protrusion 1041 of the bending portion 104 can be smoothly matched with the baffle plate 203 and the baffle plate 204 in a manner of interference fit, respectively.

In conjunction with the embodiment 1 of the present disclosure, referring to FIG. 7 to FIG. 10, the working state of the optical module unlocking device installed on the optical module will be described below.

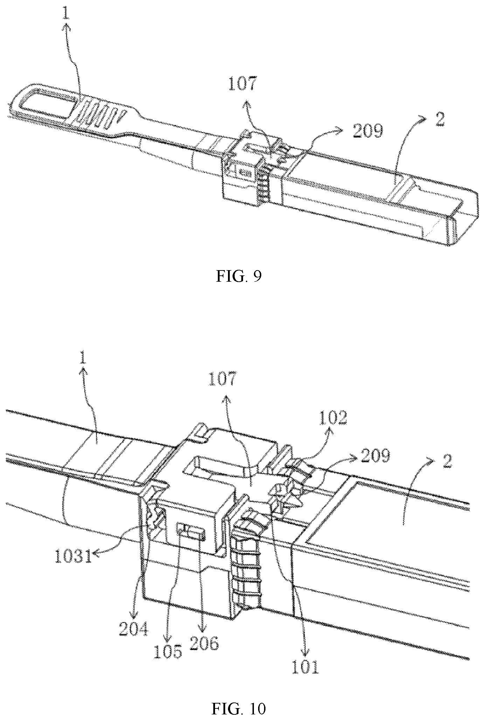

After the optical module unlocking device is installed on the optical module, when the unlocking component 108 of the pull ring 1 is in the initial state on the base 2, that is, when the handle 109 of the pull ring 1 is not pulled by any external force, as shown in FIG. 8 and FIG. 9, since the pull ring 1 is made of an elastic material, the bending portion 103 and the bending portion 104 are respectively limited by the baffle 204 and the baffle 203, and under the action of the elastic force after the deformation of the rebound protrusion 1031 and rebound protrusion 1041, the unlocking block 101 and the unlocking block 102 slide into the bottoms of the chute 201 and the chute 202 respectively. At the same time, the unlocking block 101 and the unlocking block 102 are located below the projection 209 on the base 2. At this time, the unlocking component 108 of the pull ring 1 has not been able to jack up the shielding cage shrapnel in contact with it, so the optical module is in a locked state. It should be noted that those of ordinary skill in the art can still conceive of the arrangement positions of the shielding cage shrapnel according to the prior art in the art, although the position of the shielding cage shrapnel is not shown in the accompanying drawings.

When the pull-out force is applied outward to the handle 109, the unlocking block 101 and the unlocking block 102 of the unlocking component 108 can respectively abut against the oblique side 2021 of the chute 202 and the oblique side 2011 of the chute 201 and then bulge to make the heights of the upper surfaces of the unlocking block 101 and the unlocking block 102 to be higher than the first height of the upper surface of the projection of the base 2, so that the shielding cage shrapnel matched with it can be jacked up, and the optical module can be unlocked from the shielding cage and then be pulled out.

Specifically, when pulling force is applied to the handle 109 under the action of external force, the unlocking component 109 can slide relatively on the base 2 in a sliding direction which is in a manner to slide to the outside of the shielding cage; the guide slot 105 slides along the guide post 206; the guide slot 106 slides along the guide post 205; the long arm 107 slides along the sliding slot 210; the first through slot 112 slides along the first post 211; the second through slot 113 slides along the second post 212; the rebound protrusion 1031 of the bending portion 103 is deformed under the limiting action of the baffle 204; and the rebound protrusions 1041 of the bending portion 104 is deformed under the limiting action of the baffle 203. When the heights of the upper surfaces of the unlocking block 101 and the unlocking block 102 are higher than the first height of the upper surface of the projection 209 of the base 2, the unlocking block 101 and the unlocking block 102 jack up the shielding cage shrapnel to a higher height than the first height of the upper surface of the projection 209, which enables the optical module to be unlocked from the shielding cage and then pulled out.

In an implementation, in order to lift the heights of the upper surfaces of the unlocking block 101 and the unlocking block 102 after the unlocking block 101 and the unlocking block 102 respectively abuts the oblique side 2021 of the chute 202 and the oblique side 2011 of the chute 201 and bulge, there are also provided oblique block 208 and the oblique block 207 on the base 2, wherein the oblique surface of the oblique block 208 coincides with the plane where the oblique side 2021 is located, and the oblique surface of the oblique block 207 is coincides with the plane where the oblique side 2011 is located, so as to lift the second height of the upper surfaces of the unlocking block 101 and the unlocking block 102 after the unlocking block 101 and the unlocking block 102 are respectively abutted against the oblique side 2021 and the oblique side 2011 and bulged, so that the second height is higher than the first height of the upper surface of the projection 209, and the optical module unlocking device is unlocked.

After the optical module is pulled out from the shielding cage, the external force is stopped applying to the handle 109 of the pull ring 1, and under the action of the elastic force caused by the deformation of the rebound protrusion 1031 of the bending portion 103 and the rebound protrusion 1041 of the bending portion 104, the pull ring 1 rebounds as a whole, driving the unlocking component 108 to be in the initial state again, and the unlocking block 101 and the unlocking block 102 respectively slide into the chute 202 and the chute 201 and then hide in the bottoms of the chute 202 and the chute 201.

In conjunction with Embodiment 1 of the present disclosure, referring to Fig. 1 to Fig. 6, the pull ring 1 and the base 2 are both designed as axisymmetric parts for the convenience to process and manufacture; at the same time, because the pull ring 1 is made of an elastic material, in the unlocking process of the optical module unlocking device, the unlocking component 108 of the pull ring 1 can be used to rebound under the action of elastic force, and the pull ring 1 is designed as an axisymmetric part to ensure that the pull ring 1 is subject to a balanced elasticity on both sides

The above is only the preferred embodiments of the present disclosure, and is not intended to limit the present disclosure.

## Claims

1. An optical module unlocking device, comprising a pull ring (1) and a base (2);
the base (2) including at least one chute (201, 202) which has an oblique side (2011, 2021);
the pull ring (1) including an unlocking component (108) arranged on the base (2), and the unlocking component (108) including an unlocking block (101, 102) which is in contact with the at least one chute (201, 202), wherein the pull ring (1) is made of an elastic material; and
the unlocking component (108) being slidable relatively on the base (2), and driving the unlocking block (101, 102) to slide into the at least one chute (201, 202) and then hide in a bottom of the at least one chute (201, 202), so as to enable the optical module to be in a locked state, or to abut against an oblique side (2011, 2021) of the at least one chute (201, 202) and then bulge, so as to enable the optical module to be unlocked,
**characterized in that** the unlocking component (108) is configured to unlock the optical module when a height of an upper surface of the unlocking block (101, 102) after the unlocking block (101, 102) abuts against the oblique side (2011, 2021) of the at least one chute (201, 202) and then bulges is higher than a first height of an upper surface of a projection (209) of the base (2).

2. The optical module unlocking device of claim 1, wherein the base (2) including the at least one chute (201, 202) and at least one baffle (203, 204);
at least one unlocking block (101, 102) of the unlocking component (108) is in contact with the at least one chute (201, 202), and at least one bending portion (103, 104) of the unlocking component (108) is limited by the at least one baffle (203, 204), wherein the pull ring (1) is made of an elastic material;
the unlocking component (108) being slidable relatively on the base (2), and drives the at least one unlocking block (101, 102) to slide into the at least one chute (201, 202) and then hide in a bottom of the at least one chute (201, 202), so as to enable the optical module to be in a locked state, or to abut against at least one oblique side (2011, 2021) of the at least one chute (201, 202) and then bulge, so as to enable the optical module to be unlocked;
the at least one bending portion (103, 104) being configured to drive the pull ring (1) to rebound under a limiting action of the at least one baffle (203, 204), after the at least one unlocking block (101, 102) abuts against the at least one oblique side (2011, 2021) and then bulges.

3. The optical module unlocking device of claim 2, **characterized in that** at least one oblique block (207, 208) is provided on the base (2), and at least one oblique surface of the at least one oblique block (207, 208) coincides with a plane where the at least one oblique side (2011, 2021) of the at least one chute (201, 202) is located, so as to lift a second height of the upper surface of the at least one unlocking block (101, 102) after the at least one unlocking block (101, 102) abuts against the at least one oblique side (2011, 2021) and then bulges, to enable the second height to be higher than the first height of the upper surface of the projection (209), whereby realizing unlocking of the optical module unlocking device.

4. The optical module unlocking device of claim 2, **characterized in that** a guide post (205, 206) is provided on each of both sides of the base (2), a guide slot (105, 106) is provided on each of rib plates (110, 111) at both sides of the unlocking component (108), and the guide slot (105, 106) is in position coupling with the guide post (205, 206) and is slidable relatively along the guide post (205, 206).

5. The optical module unlocking device of claim 2, **characterized in that** the at least one bending portion (103, 104) each includes a rebound protrusion (1031, 1041) which is configured to drive the pull ring (1) to rebound under the limiting action of the at least one baffle (203, 204).

6. The optical module unlocking device of claim 5, **characterized in that** after the unlocking component (108) is installed on the base (2), an interference fit is formed between the rebound protrusion (1031, 1041) of the at least one bending portion (103, 104) and the at least one baffle (203, 204).

7. The optical module unlocking device of claim 6, **characterized in that** a number of the bending portion (103, 104) and a number of the baffle (203, 204) both are two.

8. The optical module unlocking device of claim 1, **characterized in that** the unlocking component (108) further includes a long arm (107) which is connected to the at least one unlocking block (101, 102); and
the base (2) is provided with a sliding slot (210) which is positionally coupled with the long arm (107), and the long arm (107) is slidable relatively along the sliding slot (210).

9. The optical module unlocking device of claim 1, **characterized in that** the pull ring (1) further includes a handle (109) configured for pulling the pull ring (1) by applying a pulling force to the pull ring (1).

10. The optical module unlocking device of any one of claims 1 to 9, **characterized in that** the elastic material of the pull ring (1) is PEI plastic or LCP plastic, and the pull ring (1) is integrally formed.

## Patentansprüche

1. Optische Modul-Entriegelungsvorrichtung, umfassend einen Zugring (1) und eine Basis (2);
wobei die Basis (2) mindestens eine Rutsche (201, 202) mit einer schrägen Seite (2011, 2021) aufweist;
wobei der Zugring (1) eine an der Basis (2) angeordnete Entriegelungskomponente (108) umfasst und die Entriegelungskomponente (108) einen Entriegelungsblock (101, 102) umfasst, der mit der mindestens einen Rutsche (201, 202) in Kontakt steht, wobei der Zugring (1) aus einem elastischen Material hergestellt ist; und
wobei die Entriegelungskomponente (108) relativ zu der Basis (2) verschiebbar ist und den Entriegelungsblock (101, 102) in die mindestens eine Rutsche (201, 202) verschiebt und dann in einem Boden der mindestens einen Rutsche (201, 202) versteckt, um es dem optischen Modul zu ermöglichen, in einem verriegelten Zustand zu sein, oder an einer schrägen Seite (2011, 2021) der mindestens einen Rutsche (201, 202) anliegt und sich dann ausbeult, um es dem optischen Modul zu ermöglichen, entriegelt zu sein,
**dadurch gekennzeichnet, dass** die Entriegelungskomponente (108) so konfiguriert ist, dass sie das optische Modul entriegelt, wenn eine Höhe einer Oberseite des Entriegelungsblocks (101, 102) nach dem Anschlagen des Entriegelungsblocks (101, 102) an die schräge Seite (2011, 2021) der mindestens einen Rutsche (201, 202) und dann ausbeult, höher ist als eine erste Höhe einer Oberseite eines Vorsprungs (209) der Basis (2).

2. Optische Modul-Entriegelungsvorrichtung nach Anspruch 1, wobei die Basis (2) die mindestens eine Rutsche (201, 202) und mindestens eine Prellplatte (203, 204) umfasst;
mindestens ein Entriegelungsblock (101, 102) der Entriegelungskomponente (108) mit der mindestens einen Rutsche (201, 202) in Kontakt steht und mindestens ein Biegeabschnitt (103, 104) der Entriegelungskomponente (108) durch die mindestens eine Prellplatte (203, 204) begrenzt ist, wobei der Zugring (1) aus einem elastischen Material hergestellt ist;
wobei die Entriegelungskomponente (108) relativ zur Basis (2) verschiebbar ist und den mindestens einen Entriegelungsblock (101, 102) in die mindestens eine Rutsche (201, 202) gleiten lässt und dann in einem Boden der mindestens einen Rutsche (201, 202) verschwindet, um es dem optischen Modul zu ermöglichen, in einem verriegelten Zustand zu sein, oder an mindestens einer schrägen Seite (2011, 2021) der mindestens einen Rutsche (201, 202) anliegt und dann ausbeult, um es dem optischen Modul zu ermöglichen, entriegelt zu sein;
wobei der mindestens eine Biegeabschnitt (103, 104) so konfiguriert ist, dass er den Zugring (1) unter einer Begrenzungswirkung der mindestens einen Prellplatte (203, 204) zurückfedern lässt, nachdem der mindestens eine Entriegelungsblock (101, 102) an der mindestens einen schrägen Seite (2011, 2021) anliegt und sich dann ausbeult.

3. Optische Modul-Entriegelungsvorrichtung nach Anspruch 2, **dadurch gekennzeichnet, dass** mindestens ein schräger Block (207, 208) an der Basis (2) vorgesehen ist und mindestens eine schräge Fläche des mindestens einen schrägen Blocks (207, 208) mit einer Ebene zusammenfällt, in der die mindestens eine schräge Seite (2011, 2021) der mindestens einen Rutsche (201, 202) angeordnet ist, um eine zweite Höhe der Oberseite des mindestens einen Entriegelungsblocks (101, 102) anzuheben, nachdem der mindestens eine Entriegelungsblock (101, 102) an der mindestens einen schrägen Seite (2011, 2021) anliegt und dann ausbeult, um es der zweiten Höhe zu ermöglichen, höher zu sein als die erste Höhe der Oberseite des Vorsprungs (209), wodurch eine Entriegelung der optischen Modul-Entriegelungsvorrichtung realisiert wird.

4. Optische Modul-Entriegelungsvorrichtung nach Anspruch 2, **dadurch gekennzeichnet, dass** ein Führungsstift (205, 206) an jeder von beiden Seiten der Basis (2) vorgesehen ist, ein Führungsschlitz (105, 106) an jeder von Rippenplatten (110, 111) an beiden Seiten der Entriegelungskomponente (108) vorgesehen ist, und der Führungsschlitz (105, 106) in Positionskopplung mit dem Führungsstift (205, 206) steht und relativ entlang des Führungsstifts (205, 206) verschiebbar ist.

5. Optische Modul-Entriegelungsvorrichtung nach Anspruch 2, **dadurch gekennzeichnet, dass** der mindestens eine Biegeabschnitt (103, 104) jeweils einen Rückprallvorsprung (1031, 1041) aufweist, der so konfiguriert ist, dass er den Zugring (1) unter der Begrenzungswirkung der mindestens einen Prallplatte (203, 204) zum Rückprallen antreibt.

6. Optische Modul-Entriegelungsvorrichtung nach Anspruch 5, **dadurch gekennzeichnet, dass** nach dem Einbau der Entriegelungskomponente (108) in die Basis (2) eine Presspassung zwischen dem Rückprallvorsprung (1031, 1041) des mindestens einen Biegeabschnitts (103, 104) und der mindestens einen Prallplatte (203, 204) gebildet wird.

7. Optische Modul-Entriegelungsvorrichtung nach Anspruch 6, **dadurch gekennzeichnet, dass** eine Anzahl des Biegeabschnitts (103, 104) und eine Anzahl der Prellplatte (203, 204) beide zwei sind.

8. Optische Modul-Entriegelungsvorrichtung nach Anspruch 1, **dadurch gekennzeichnet, dass** die Entriegelungskomponente (108) ferner einen langen Arm (107) umfasst, der mit dem mindestens einen Entriegelungsblock (101, 102) verbunden ist; und
die Basis (2) mit einem Gleitschlitz (210) versehen ist, der positionsmäßig mit dem langen Arm (107) gekoppelt ist, und der lange Arm (107) relativ entlang des Gleitschlitzes (210) verschiebbar ist.

9. Optische Modul-Entriegelungsvorrichtung nach Anspruch 1, **dadurch gekennzeichnet, dass** der Zugring (1) ferner einen Griff (109) umfasst, der zum Ziehen des Zugrings (1) durch Aufbringen einer Zugkraft auf den Zugring (1) konfiguriert ist.

10. Optische Modul-Entriegelungsvorrichtung nach einem der Ansprüche 1 bis 9, **dadurch gekennzeichnet, dass** das elastische Material des Zugrings (1) PEI-Kunststoff oder LCP-Kunststoff ist und der Zugring (1) einstückig ausgebildet ist.

## Revendications

1. Dispositif de déverrouillage de module optique, comprenant une languette de tirage (1) et une base (2);
la base (2) comprenant au moins une glissière (201, 202) qui a un côté oblique (2011, 2021);
la languette de tirage (1) comprenant un élément de déverrouillage (108) disposé sur la base (2), et l'élément de déverrouillage (108) comprend un bloc de déverrouillage (101, 102) qui est en contact avec l'au moins une glissière (201, 202), la languette de tirage (1) étant composé d'une matière élastique; et
l'élément de déverrouillage (108) pouvant coulisser par rapport à la base (2), et amener le bloc de déverrouillage (101, 102) à glisser dans l'au moins une glissière (201, 202) puis à disparaître au fond de l'au moins une glissière (201, 202), de façon à verrouiller le module optique, ou à buter contre un côté oblique (2011, 2021) de l'au moins une glissière (201, 202) puis à se bomber, de façon à déverrouiller le module optique,
**caractérisé en ce que** l'élément de déverrouillage (108) est conçu pour déverrouiller le module optique lorsque la hauteur d'une surface supérieure du bloc de déverrouillage (101, 102), après que le bloc de déverrouillage (101, 102) a buté contre le côté oblique (2011, 2021) de l'au moins une glissière (201, 202) et qu'il s'est ensuite bombé, est supérieure à une première hauteur d'une surface supérieure d'une saillie (209) de la base (2).

2. Dispositif de déverrouillage de module optique selon la revendication 1, dans lequel la base (2) comprend au moins une glissière (201, 202) et au moins une cloison (203, 204);
au moins un bloc de déverrouillage (101, 102) de l'élément de déverrouillage (108) est en contact avec l'au moins une glissière (201, 202), et au moins une portion de flexion (103, 104) de l'élément de déverrouillage (108) est limitée par l'au moins une cloison (203, 204), la languette de tirage (1) étant composée d'une matière élastique;
l'élément de déverrouillage (108) pouvant coulisser par rapport à la base (2), et amène l'au moins un bloc de déverrouillage (101, 102) à glisser dans l'au moins une glissière (201, 202) puis à disparaître au fond de l'au moins une glissière (201, 202), de façon à verrouiller le module optique, ou à buter contre au moins un côté oblique (2011, 2021) de l'au moins une glissière (201, 202) puis à se bomber, de façon à déverrouiller le module optique;
l'au moins une portion de flexion (103, 104) étant conçue pour faire rebondir la languette de tirage (1) soumise à l'action de limitation de l'au moins une cloison (203, 204), après que l'au moins un bloc de déverrouillage (101, 102) a e contre l'au moins un côté oblique (2011, 2021) et qu'il s'est ensuite bombé.

3. Dispositif de déverrouillage de module optique selon la revendication 2, **caractérisé en ce qu'**au moins un bloc oblique (207, 208) est disposé sur la base (2), et au moins une surface oblique de l'au moins un bloc oblique (207, 208) coïncide avec un plan où se trouve l'au moins un côté oblique (2011, 2021) de l'au moins une glissière (201, 202), de manière à soulever une deuxième hauteur de la surface supérieure de l'au moins un bloc de déverrouillage (101, 102) après que l'au moins un bloc de déverrouillage (101, 102) a buté contre l'au moins un côté oblique (2011, 2021) et s'est ensuite bombé, pour permettre à la deuxième hauteur d'être plus élevée que la première hauteur de la surface supérieure de la saillie (209), réalisant ainsi le déverrouillage du dispositif de déverrouillage du module optique.

4. Dispositif de déverrouillage de module optique selon la revendication 2, **caractérisé en ce qu'**une tige de guidage (205, 206) est disposée de chaque côté de la base (2), une fente de guidage (105, 106) est pratiquée sur chacune des plaques nervurées (110, 111) des deux côtés de l'élément de déverrouillage (108), et la fente de guidage (105, 106) est en position d'accouplement avec la tige de guidage (205, 206) et peut coulisser relativement le long de tige de guidage (205, 206).

5. Dispositif de déverrouillage de module optique selon la revendication 2, **caractérisé en ce que** l'au moins une portion de flexion (103, 104) comprend chacune une saillie de rebond (1031, 1041) qui est conçue pour amener la languette de tirage (1) à rebondir sous l'action limitative de l'au moins une cloison (203, 204).

6. Dispositif de déverrouillage de module optique selon la revendication 5, **caractérisé en ce qu'**après l'installation de l'élément de déverrouillage (108) sur la base (2), un ajustement d'interférence est formé entre la saillie de rebond (1031, 1041) de l'au moins une portion de flexion (103, 104) et l'au moins une cloison (203, 204).

7. Dispositif de déverrouillage de module optique selon la revendication 6, **caractérisé en ce que** la portion de flexion (103, 104) et la cloison (203, 204) sont tous les deux au nombre de deux.

8. Dispositif de déverrouillage de module optique selon la revendication 1, **caractérisé en ce que** l'élément de déverrouillage (108) comprend en outre un bras long (107) qui est relié à l'au moins un bloc de déverrouillage (101, 102); et
la base (2) est pourvue d'une fente de coulissement (210) qui est couplée en position avec le bras long (107), et le bras long (107) peut coulisser relativement le long de la fente de coulissement (210).

9. Dispositif de déverrouillage de module optique selon la revendication 1, **caractérisé en ce que** la languette de tirage (1) comprend en outre une poignée (109) conçue pour tirer la languette de tirage (1) par application d'une force de tirage à la languette de tirage (1).

10. Dispositif de déverrouillage de module optique selon l'une quelconque des revendications 1 à 9, **caractérisé en ce que** le matériau élastique de la languette de tirage (1) est un plastique PEI ou un plastique LCP, et **en ce que** la languette de tirage (1) est formée d'une seule pièce.
